# EUROPEAN PATENT SPECIFICATION

(11) **EP 2 530 979 B1**
(45) Date of publication and mention of the grant of the patent: **22.10.2014**
(21) Application number: 11290253.1
(22) Date of filing: 03.06.2011
(51) Int. Cl.: H04W 52/02, H04W 16/08, H04W 72/04

(54) **A base station, a network, and a method of base station switching between modes**
Basisstation, Netz und Verfahren zum Umschalten der Basisstation zwischen Modi
Station de base, réseau et procédé pour la commutation d'une station de base d'un mode à l'autre

(43) Date of publication of application: 05.12.2012
(73) Proprietor: ALCATEL LUCENT, 92100 Boulogne-Billancourt (FR)
(72) Inventor: Khatib, Mohammad, Swindon Wiltshire, SN25 1TZ (GB)
(74) Representative: Sarup, David Alexander

(56) References cited:
- EP-A2- 0 923 259
- WO-A1-02/07464

## Description

### Field of the Invention

The present invention relates to telecommunications, in particular to wireless telecommunications.

### Description of the Related Art

Cellular networks for wireless telecommunications involve base stations that provide radio coverage to mobile user terminals so as to provide air interface access to the user terminals. The base stations are connected to other network elements in the cellular network that support various functions. The typical coverage range of a macrocellular base station is about five kilometres depending on the power at which radiofrequency (RF) signals are transmitted, and the terrain around the base station, for example whether urban or rural. The base stations are deployed in large numbers in order to provide good radio coverage and hence good service to mobile user terminals.

In order to remain integrated in the network, each network element exchanges control signalling over its interfaces to other network elements using protocols defined in, for example, Second Generation (2.G), 2.5G or Third Generation (3G) telecommunications standards. For example, signalling to and from base stations is standards compliant. To this end, base stations are grouped into clusters each served by a respective Radio Network Controller (RNC). The RNC is connected to a Serving GPRS Support Node (SGSN),where GPRS denotes General Packet Radio, System. The SGSN is connected to other elements in a Packet-Switched core network. The RNC is also connected via a mobile switching centre (3G-MSC) to elements in a Circuit-Switched core network.

Due to the large power consumption by each macrocell base station and the large number of them that are deployed, energy consumption has become a growing concern. For example, a base station having a power amplifier typically in the 20 to 60 watt range has a typical power consumption of 1 kilowatt (typically in a range of 0.5 to 1.5 kilowatts). Assuming continuous operation, this corresponds to an annual consumption by a single base station of 8760 kilowatt-hours. This energy corresponds to 7.2 tons of Carbon Dioxide emissions, assuming 821 grammes of Carbon Dioxide per kilowatt-hour.

A macrocell base station may have multiple antennas each serving a respective cell (also known as a sector). A known approach to energy saving in base stations is to switch off the power amplifier of a particular cell leaving other components powered up. In consequence, energy is consumed at a slightly reduced rate.

Another known approach where more than one radio carrier frequency band is used by a base station, for example in High Speed Packet Access (HSPA) systems, is to switch off the second carrier band.

These solutions provide only modest energy savings.

Another area of background is that upon a base station being taken out of use, the radio coverage 'hole' may be filled by a method known as Common PIlot CHannel (CPICH) redistribution. CPICH redistribution is where pilot signal (common pilot channel) powers, and hence radio coverage, of neighbouring base stations are adjusted to avoid a coverage hole. The levels of CPICH power increase applied in the selected neighbouring macrocell base stations are set knowing the size of the switched-off macrocell coverage area, in other words the coverage hole, to be filled. In consequence, the power of other channels, such as physical channels and dedicated channels, is increased correspondingly. Further details about CPICH redistribution are provided in the following three papers: [1] D. Kim, Y. Chang, and J.W. Lee, "Pilot power control and service coverage support in CDMA mobile systems", Proc. IEEE VTC, Houston, TX, pp. 1464-1468, May 1999. [2] R.T. Love, K.A. Beshir, D. Schaeffer, and R.S. Nikides, "A pilot optimization technique for CDMA cellular systems", Proc. IEEE VTC, Amsterdam, The Netherlands, pp 2238-2242, 1999. [3] K. Valkealahti, A. Hoglund, J. Parkkinen, and A. Hamalainen, "WCDMA Pilot Power Control for load and coverage balancing" , Proceedings of the 13th IEEE International Symposium on Personal, Indoor and Mobile Radio Communications (PIMRC 2002), vol. 3, pp. 1412-1416.

European Patent Publication EP-A-0923259 and International (P.C.T.) Patent Publication No. WO 02/07464 provide technical background.

It is known from EP-A-0923259 to provide a method of a first base station for wireless telecommunications switching between a first mode in which the first base station sends pilot channel signals and a second mode in which the first base station does not send pilot channel signals;
the first base station recording for a given time period expected levels of loading on the cells of the first base station, expected levels of loading in cells facing towards the first base station; and
the first base station determining to switch between the modes dependent upon criteria being met relating to said levels.

### Summary

The present invention provides a method of a first base station for wireless telecommunications switching between a first mode in which the first base station sends pilot channel signals and a second mode in which the first base station does not send pilot channel signals;
the first base station recording for a given time period expected levels of loading on the cells of the first base station, expected levels of loading in cells facing towards the first base station; and
the first base station determining to switch between the modes dependent upon criteria being met relating to said levels characterised by
the expected levels of loading in cells facing towards the first base station comprise expected levels of loading in cells facing towards the first base station of a ring of closest neighbouring base stations, and expected levels of loading in cells facing towards the first base station of selected base stations from among a ring of next closest neighbouring base stations; and in which the criteria include that the expected loading on each cell of the first base station is less than a first given level, the expected loading on each cell facing towards the first base station of a ring of closest neighbouring base stations is less than a second level that is higher than the first level, and the expected loading in the cells facing towards the first base station of selected base stations from among a ring of next closest neighbouring base stations is less than a third level that is higher than the second level.

The reader is referred to the appended independent claims. Some preferred features are laid out in the dependent claims.

In preferred embodiments of the invention, a base station dynamically forecasts demands within a macrocell based network and powers down when appropriate, so providing significant energy savings. Preferred embodiments reduce the carbon dioxide emission of macrocells by efficiently reducing power consumption without sacrificing core functionalities.

Preferred embodiments provide autonomous invocation of energy saving in, for example, Third Generation Partnership Project (3GPP) Release 99 macrocell base stations without relying on core network control. In some embodiments, there is no increase in NodeB Application Part signalling or Radio Network Controller signalling.

Preferred embodiments may be 3GPP Release 99 base stations operating in a homogeneous Wideband-Code Division Multiple Access (Frequency Division Duplex) environment. A preferred base station may determine whether energy saving mode is possible, go into energy saving mode, trigger the radio network controller of the base station to block resources to the base station, and trigger the relevant cells of neighbouring base stations to adjust their pilot signal powers so as to close the coverage gap which would otherwise occur.

In preferred embodiments, after the given period of one hour, the base station resumes its higher power normal mode in which pilot signal transmissions are made by the base station. In preferred embodiments, a Radio Network Controller may deny a request from the base station to be permitted to enter energy saving mode, or, when appropriate, may command the base station, if then in energy saving mode, to revert back to normal operation.

### Brief Description of the Drawings

Embodiments of the present invention will now be described by way of example and with reference to the drawings, in which:
Figure 1 is a diagram illustrating a network for wireless telecommunications according to a first embodiment of the invention,
Figure 2 is a diagram further illustrating the network shown in Figure 1,
Figure 3 is a diagram illustrating a Radio Network Contoller (RNC) and base station shown in Figures 1 and 2,
Figure 4 is a message sequence diagram illustrating operation of the RNC and base station shown in Figure 3, and
Figure 5 is a diagram illustrating an example of how the macrocell base stations are laid out in the network shown in Figures 1 and 2.

### Detailed Description

We first outline the example, then go into more detail.

The inventors realised that a proactive approach to energy saving in base stations was possible by actively seeking out an underutilised base station and transferring or rerouting its traffic to busier base stations. Specifically, some neighbouring macrocell base stations may take up the coverage using CPICH redistribution, and hence that traffic. The underutilised base station is then switched off resulting in significant energy saving. Base stations in a macrocellular base station network may typically be underutilised for up to 200 to 300 minutes per day spread across the day. At times of low usage, base stations are switched off for an hour at a time.

Each base station includes an energy save controller. The controller actively looks at call traffic to determine a traffic load forecast for the next hour and shuts the base station down if the traffic loading is predicted to be less than a given threshold. The coverage hole that would otherwise occur is then filled by selected neighbouring base stations employing CPICH redistribution.

Going into more detail, we describe a network including base stations then look into greater detail at energy saving in base stations and consequential CPICH redistribution.

### Network

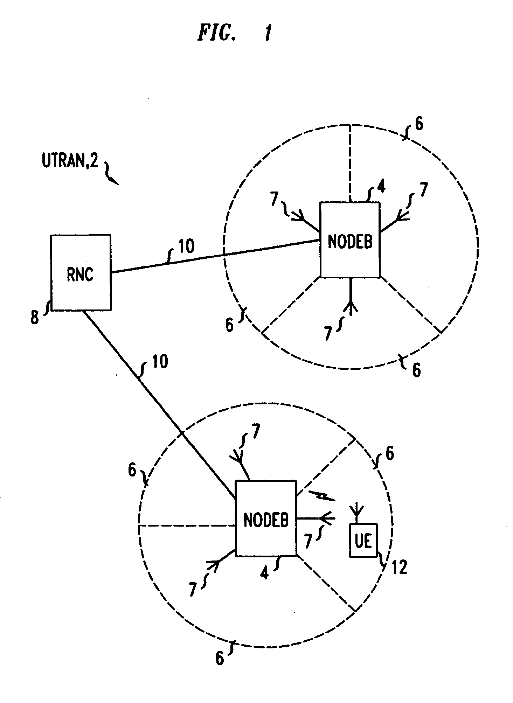

The network is a Universal Mobile Telecommunications System (UMTS) terrestrial radio access network (UTRAN), which is a type of wideband code division multiple access (WCDMA) network for mobile telecommunications. The UTRAN network is basically as shown in Figure 1. In Figure 1, only one Radio Network Controller (RNC) 8 and two base stations 4 of the UTRAN network 2 are shown for simplicity, and each base station 4 is also designated "NodeB" in accordance with UMTS terminology. A cell, also referred to as a sector, is the radio coverage area served by a directional antenna of a base station. Each base station has three cells 6, provided by a respective one of three directional antennas 7 angled in azimuth at 120 degress to each other. Each RNC is connected to a core network (not shown) and typically controls several base stations 4 and hence multiple cells 6. A base station is connected to its controlling RNC 7 via a respective interface 10 known as an IuB interface. In use, a mobile user terminal 12 often referred to as a user equipment (UE) communicates with a serving RNC 8 via at least one cell 6 of at least one base station 4. In that way, the mobile user terminal communicates with the UTRAN network 2.

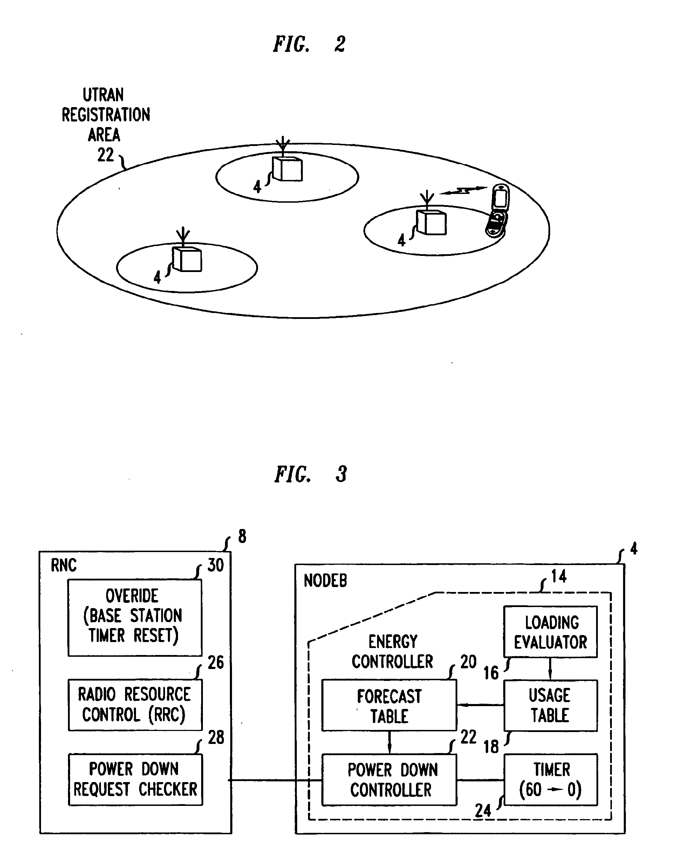

Each RNC has a corresponding UTRAN Registration Area (URA). As shown in Figure 2, the UTRAN 2 consists of multiple base stations 4 grouped such that all base stations connected to a single RNC are considered as belonging to a single URA 22.

### Energy Saving

As shown in Figure 3, each base station 4 includes an energy controller 14 which is the main controller to trigger shutdown, based on forecasted traffic demand in the upcoming hour learned through tracking the loading of base stations over a longer period of time. The energy controller includes a loading evaluator 16 connected to a usage table 18 that is connected to a forecast table 20. The forecast table 20 is connected to a power down controller 22 connected to a countdown timer 24. The counter 24 is a sixty to zero minutes countdown timer.

As also shown in Figure 3, the radio network controller (RNC) to which base station 4 is attached, includes a radio resource control (RRC) stage 26 , a power down request checker 28, and an override function 30. The override function 30 is a base station timer reset function. Operation of the base station and the RNC is described below.

### Operation

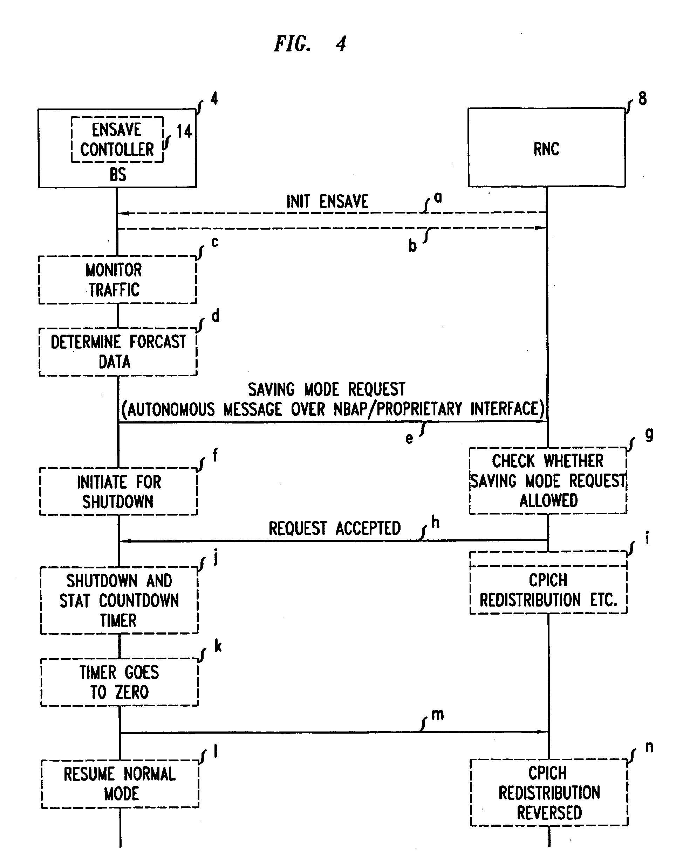

As shown in Figure 4, the energy controller 14 in the base station is initialised by messaging from the RNC to the base station (step a) and messaging from the base station to the RNC (step b) at base station start-up. As part of this, the identifier of the base station, namely the NodeB Context ID, is made known to the RNC. In consequence, the RNC knows the identities of those base stations to which the RNC is connected that have a respective energy controller.

The loading evaluator 16 of the energy controller 14 monitors (step c) traffic loading. Specifically, the loading evaluator 16 continuously monitors traffic loading in the base station 4 and at neighbouring base stations by reading measurement reports sent by user terminals in the relevant coverage area. The evaluator 16 collects data in the usage table 18 of load conditions on the base station and its selected neighbour base stations, as explained in more detail below, on a day and hour specific basis, in order to learn its own usage pattern and that of its neighbouring cells. Specifically, data is collected for every hour of Mondays, of Tuesdays, and so on.

### Data Collection

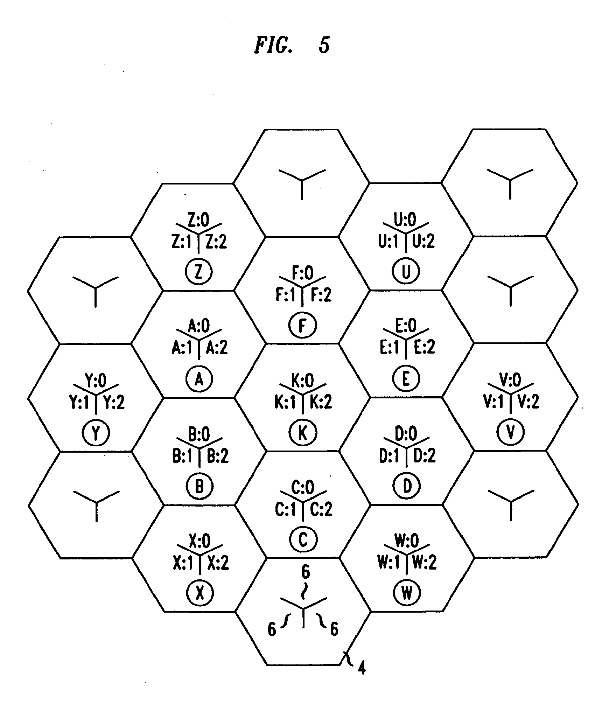

As shown in Figure 5, in an example layout of base stations 4 each having three directional antennas (not shown in Figure 5) and hence three cells 6 (also known as sectors), a base station denoted K has three cells denoted K:0,K:1,K:2. Base station K collects data by analysing the measurement reports received by all of its own cells and the relevant cells of the closest ring of neighbouring base stations, and selected cells in the next outer ring of neighbouring base stations. The closest ring of base stations are A, B, C, D, E, and F. These can be considered level 1 neighbouring base stations, and the relevant cells facing the base station K are A:2, B:0, B:2, C:0, D:0, D:1, E:1, F:1 and F:2. The selected ones of the next outer ring of neighbouring base stations are the ones in that next outer ring that have a respective single cell facing towards base station K, namely the alternate base stations (e.g. first, third, fifth etc) in that ring. Specifically, in this example, the selected base stations are base stations U,V,W, X, Y, and Z. These six base stations may be considered as level 2 neighbouring base stations in respect of base station K, and the relevant cells facing base station K are U:1, V:1, W:0, X:0, Y:2, and Z:2.

The data collection involves the evaluator 16 allocating a numeric value for the hourly usage of a cell of a base station for each specific hour of each particular day. This numeric value indicates the percentage of total capacity used for a particular day (e.g. Wednesday) and hour (11.00am to 12.00pm). This data is used to update the usage table 18 which is a record of the running averages of the latest five weeks for each day of the week and hour of the day, for the cells of the base station itself and for the cells referred to above of the level 1 and level 2 neighbouring base stations.

### Data Forecast

From the usage table 18, a forecast table 20 of data is produced for the base station which in this example is the running average data for base station and its neighbours. In this example, the two tables hold the same data. The base station 4, K knows the running average data for itself (base station K) and for the relevant cells of its level 1 neighbours (A,B,C,D,E,F) and level 2 neighbours (U,
V,W,X,Y,Z).

In an otherwise similar example, the forecast data is the running average data adjusted by appropriate weights. The weights account for changes other than on a daily basis, such as to account for seasons, holiday, daylight saving time changes etc.

### Triggering Energy Saving

From the forecast table data, the power down controller 22 determines (step d) forecast data of loading for each of the three cells of the base station K and for the relevant cells of the neighbouring base stations, and from that data determines (step e) whether criteria to trigger power down are fulfilled.

Specifically the criteria are as follows, where L_{f} is the fraction of maximum loading for the respective cell:
If
   L _{f(K:0)} ≤ 0.4
   L_{f(K:1)} ≤ 0.4
   L _{f(K:2)} ≤ 0.4
   Average { L _{f(K:0)}, L _{f(K:1)}, L _{f(K:2)} } ≤ 0.35
and
   L _{f(A:2)} ≤ 0.7
   L _{f(B:0,2)} ≤ 0.7
   L _{f(C:0)} ≤ 0.7
   L _{f(D:0,1)} ≤ 0.7
   L _{f(E:1)} ≤ 0.7
   L _{f(F:1,2)} ≤ 0.7
   Average { L _{f(A:2)} , L _{f(B:0,2)} , L _{f(C:0)} , L _{f(D:0,1)}, L _{f(E:1)} , L _{f(F:1,2)} } ≤ 0.65
and
   L_{f(U:1)} ≤ 0.9
   L _{f(V:1)} ≤ 0.9
   L _{f(W:0)} ≤ 0.9
   L _{f(X:0)} ≤ 0.9
   L _{f(Y:2)} ≤ 0.9
   L _{f(Z:2)} ≤ 0.9
   Average { L _{f(U:1)} , L _{f(V:1}), L _{f(W:0)}, L _{f(X:0)}, L _{f(Y:2)} , L _{f(Z:2)} } ≤ 0.8
then
   Trigger ENERGY SAVING MODE request to RNC
else
   Continue NORMAL MODE (in other words Power up mode).
   (In some alternative embodiments, the above threshold values are merely initial threshold values to trigger energy saving mode, and are subject to further optimization through continuous learning of the algorithm.)

In consequence, the base station K automatically sends (step e) the energy saving mode request to the RNC. The request is an autonomous message sent over the NodeB Application Part (NBAP) interface (or a proprietary interface) between the base station 4 and RNC 8.

The base station initiates the energy SAVING MODE by waiting (step f) for in-progress calls to finish without allowing new calls via the base station K to be initiated.

### RNC Involvement

Almost in parallel with the above-mentioned step f, the request checker function 28 of the RNC checks (step g) the request to determine whether the request can be allowed. Specifically, the RNC checks for energy saving mode requests from other base stations in the registration area of the RNC that are pending or have been agreed to within the last hour. If no other current energy saving mode request is pending, or agreed to within the last hour, from base stations within the registration area, then the request is accepted. (If there is more than one request, then providing there is sufficient physical gap (in other words radial distance) between the base stations then more than one request may be allowed at a time. In this example, the minimum physical gap for two requests to be accepted by the RNC is four cells.

As shown in Figure 4, if the request is allowed then the RNC responds (step h) with a request accepted message. (Conversely, if the request were not allowed then a request overruled message would have been sent to the base station causing the base station to cease initiating entry to energy saving mode and instead continuing in normal mode.)

Once the saving mode request is allowed by the RNC, the radio resource control (RRC) function of the RNC acts (step i) to:
- start blocking the radio resource allocation to all three cells of the base station K as a target for handover,
- allocate radio resources for any new call request to a cell of a neighbouring base station, and
- not accept any new calls involving base station K for the next hour.
- As part of this, the RRC ensures that connection via the RNC is maintained to user terminals in call connection, (e.g. CELL_DCH state) until the respective call is completed or is handed over ( in a natural, i.e. non-forced handover) to another cell of another base station. The RRC also causes user terminals that are idle-mode connected to base station K, for example in Cell_PCH state or URA_PCH state, to perform a cell update to as to be assigned to sectors of other base stations.
- As part of this the RRC 26 of the RNC 8 effects pilot power adjustment (also known as CPICH redistribution) as explained in more detail below.

### Pilot Power Adjustment ("CPICH redistribution")

Once the base station is switched off, CPICH redistribution (step n) is undertaken whereby the pilot signal power and hence cell coverage is adjusted so as to avoid a coverage hole. In consequence, the powers of other channels (such as physical channel and dedicated channels) are increased correspondingly. The levels of CPICH power increase applied in the selected neighbouring cells are set knowing the size of the switched-off cell, and hence size of the coverage hole, to be filled.

As shown in Figure 5, the base station denoted K (all cells K:0, K:1, K:2) enters energy saving mode, producing a coverage hole. The adjacent cells of level I neighbouring base stations A to F, and the adjacent cells of level 2 neighbouring base stations U to Z, are adjusted to cover the coverage hole. Specifically the cells that are adjusted are A:2, B:0, B:2, C:0, D:0, D:1, E:1, F:1, and F:2 of the level 1 neighbours and U:1, V:1, W:0, X:0, Y:2, and Z:2 of the level 2 neighbours.

### Energy saving mode and exiting from energy saving mode

The base station receives the saving mode accept message so shuts down (step j) for the set duration of one hour in this example. The timer 24 is started so as to count down the sixty minutes. In this time the base station is in energy saving mode in which the energy consumption is almost zero.

Upon the timer count reaching time zero minutes (step k) the base station is returned (step *l*) to normal mode, and sends (step m) a message to the RNC 8 informing that the base station has powered up.

Instead of the timer 24 counting down to zero over sixty minutes, the timer may be deliberately prematurely reset to zero by a command signal from the RNC. This is done in exceptional circumstances, for example when the RNC discovers that capacity of the network is inadequate whilst the base station is shutdown.

Upon the base station resuming normal mode the CPICH redistribution is reversed.

### General

The base stations may be, for example a Universal Mobile Telecommunications System (UMTS), a Wideband-Code Division Multiple Access, W-CDMA, or a Release 99 Frequency Division Duplex, FDD, base stations.

The present invention may be embodied in other specific forms without departing from its essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

A person skilled in the art would readily recognize that steps of various above-described methods can be performed by programmed computers. Some embodiments relate to program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. Some embodiments involve computers programmed to perform said steps of the above-described methods.

## Claims

1. A method of a first base station (4, K) for wireless telecommunications switching between a first mode in which the first base station sends pilot channel signals and a second mode in which the first base station does not send pilot channel signals;
the first base station (4, K) recording for a given time period expected levels of loading on the cells of the first base station, expected levels of loading in cells facing towards the first base station; and
the first base station determining to switch between the modes dependent upon criteria being met relating to said levels **characterised by**
the expected levels of loading in cells facing towards the first base station comprise expected levels of loading in cells (A:2, B:0, B:2, C:0, D:0, D:1, E:1, F:1, F:2) facing towards the first base station of a ring (A, B, C, D, E, F) of closest neighbouring base stations, and expected levels of loading in cells (U:1, V:1, W:0, X:0, Y:2, Z:2) facing towards the first base station of selected base stations (U, V, W, X, Y, Z) from among a ring of next closest neighbouring base stations; and in which the criteria include that the expected loading on each cell of the first base station (4, K) is less than a first given level, the expected loading on each cell facing towards the first base station of a ring of closest neighbouring base stations is less than a second level that is higher than the first level, and the expected loading in the cells facing towards the first base station of selected base stations from among a ring of next closest neighbouring base stations is less than a third level that is higher than the second level.

2. A method according to claim 1, in which the neighbouring base stations each have at least three cells, the base stations in the ring of closest base stations each have one or two cells facing towards the first base station, and
the selected base stations from among the ring of next closest base stations each have a respective single cell facing toward the first base station.

3. A method according to claim 2, in which the selected base stations (U, V, W, X, Y, Z) from among the ring of next closest base stations are alternate base stations in that ring.

4. A method according to any preceding claim, in which the first mode is a higher power usage mode and the second mode is a lower power usage mode.

5. A method according to any preceding claim, in which upon the criteria being met, the first base station (4, K) confirms with a network controller (8) of the first base station and the neighbouring base stations as to whether switching to the second mode is authorised.

6. A method according to claim 5, in which the network controller (8) does not authorise the mode switching dependent on whether another base station in the domain of the network controller is in the second mode or has made a current request to be in the second mode.

7. A method according to claim 5, in which the network controller (8) authorises the mode switching even upon another base station in the domain of the network controller being in the second mode or having made a current request to be in the second mode, provided the first base station and said another base station are separated by a distance of at least several cells.

8. A method according to any preceding claim, in which in the first base station (4, K) a timer of a given period is started upon entry into the second mode, and upon the given period expiring the first base station returns to the first mode.

9. A method according to claim 8, in which upon a command from the network controller (8) being received before the given period expires, the first base station returns to the first mode.

10. A method according to any preceding claim, in which the expected levels of loading are determined for each one hour period for each day of the week by recording a running average of usage data in each of the one hour periods over several weeks.

11. A method according to claim 10, in which the running average data is adjusted by weights to account for a predictable usage variation.

12. A first base station (4, K) for wireless telecommunications comprising multiple cells, the base station comprising:
a traffic loading processor configured to determine expected levels of traffic loading on the cells of the first base station and to record expected levels of traffic loading on cells facing towards the first base station;
a controller (14) configured to switch the base station from a mode in which the base station sends pilot signals to a mode in the base station does not send pilot signals dependent upon criteria being met relating to said levels; **characterised by**
the expected levels of loading in cells facing towards the first base station comprise expected levels of loading in cells (A:2, B:0, B:2, C:0, D:0, D:1, E:1, F:1, F:2) facing towards the first base station of a ring (A, B, C, D, E, F) of closest neighbouring base stations, and expected levels of loading in cells (U:1, V:1, W:0, X:0, Y:2, Z:2) facing towards the first base station of selected base stations (U, V, W, X, Y, Z) from among a ring of next closest neighbouring base stations; and in which the criteria include that the expected loading on each cell of the first base station (4, K) is less than a first given level, the expected loading on each cell facing towards the first base station of a ring of closest neighbouring base stations is less than a second level that is higher than the first level, and the expected loading in the cells facing towards the first base station of selected base stations from among a ring of next closest neighbouring base stations is less than a third level that is higher than the second level.

13. A base station according to claim 12, in which the first mode is a higher power usage mode and the second mode is a lower power usage mode.

14. A network for wireless telecommunications comprising the base station (4, K) according to claim 12 or 13, neighbouring base stations and a radio network controller (8), in which, in use, upon the criteria being met, the base station (4, K) confirms with the network controller (8) of the base station and the neighbouring base stations as to whether switching to the second mode is authorised.

## Patentansprüche

1. Verfahren, in welchem eine erste Basisstation (4, K) für drahtlose Telekommunikationen zwischen einem ersten Betriebsmodus, in welchem die erste Basisstation Pilotkanalsignale sendet, und einem zweiten Betriebsmodus, in welchem die erste Basisstation keine Pilotkanalsignale sendet, umschaltet;
wobei die erste Basisstation (4, K) für eine gegebene Zeitspanne erwartete Lastpegel, auf den Zellen der ersten Basisstation und erwartete Lastpegel in Zellen, welche der ersten Basisstation zugewandt sind, aufzeichnet; und
wobei die erste Basisstation in Abhängigkeit von auf die besagten Pegel bezogenen erfüllten Kriterien bestimmt, zwischen den Betriebsmodi umzuschalten, **dadurch gekennzeichnet ,dass**
die erwarteten Lastpegel in Zellen, welche der ersten Basisstation zugewandt sind, erwartete Lastpegel in Zellen (A:2, B:0, B:2, C:0, D:0, D:1, E:1, F:1; F:2), welche der ersten Basisstation eines Rings (A, B, C, D, E, F) der am nächsten liegenden benachbarten Basisstationen zugewandt sind, und erwartete Lastpegel in Zellen (U:1, V:1, W:0, X:0, Y:2, Z:2), welche der ersten Basisstation von ausgewählten Basisstationen (U, V, W, X, Y, Z) eines Rings von am nächsten liegenden benachbarten Basisstationen zugewandt sind, umfassen; und wobei die Kriterien einschließen, dass die erwartete Last auf jeder Zelle der ersten Basisstation (4, K) niedriger als ein gegebener Pegel ist, dass die erwartete Last auf jeder Zelle, welche der ersten Basisstation eines Rings von am nächsten liegenden benachbarten Basisstationen zugewandt ist, niedriger ist als ein zweiter Pegel, welcher höher als der erste Pegel ist, und dass die erwartete Last in den Zellen, welche der ersten Basisstation von ausgewählten Basistationen eines Rings von am nächsten liegenden benachbarten Basisstationen zugewandt sind, niedriger ist als ein dritter Pegel, welcher höher als der zweite Pegel ist.

2. Verfahren nach Anspruch 1, wobei die benachbarten Basisstationen jeweils mindestens drei Zellen aufweisen, wobei die Basisstationen im Ring von am nächsten liegenden Basisstationen jeweils eine oder zwei Zellen, welche der ersten Basisstation zugewandt sind, aufweisen, und wobei die ausgewählten Basisstationen des Rings von am nächsten liegenden Basisstationen jeweils eine einzelne Zelle aufweisen, welche der ersten Basisstation zugewandt ist.

3. Verfahren nach Anspruch 2, wobei die ausgewählten Basisstationen (U, V, W, X, Y, Z) in dem Ring von am nächsten liegenden Basisstationen alternative Basisstationen in diesem Ring sind.

4. Verfahren nach einem beliebigen der vorstehenden Ansprüche, wobei der erste Betriebsmodus ein Betriebsmodus mit höherem Energieverbrauch ist und der zweite Betriebsmodus ein Betriebsmodus mit niedrigerem Energieverbrauch ist.

5. Verfahren nach einem beliebigen der vorstehenden Ansprüche, wobei, wenn die Kriterien erfüllt sind, die erste Basisstation (4, K) einem Netzwerk-Controller (8) der ersten Basisstation und der benachbarten Basisstationen bestätigt, ob das Umschalten in den zweiten Betriebsmodus zugelassen ist.

6. Verfahren nach Anspruch 5, wobei der Netzwerk-Controller (8) in Abhängigkeit davon, ob sich eine andere Basisstation im Bereich des Netzwerk-Controllers in dem zweiten Betriebsmodus befindet oder eine aktuelle Anforderung für den zweiten Betriebsmodus gestellt hat, das Umschalten des Betriebsmodus nicht zugelassen ist.

7. Verfahren nach Anspruch 5, wobei der Netzwerk-Controller (8) selbst dann, wenn sich eine andere Basisstation im Bereich des Netzwerk-Controllers in dem zweiten Betriebsmodus befindet oder eine aktuelle Anforderung für den zweiten Betriebsmodus gestellt hat, das Umschalten des Betriebsmodus zugelassen ist, vorausgesetzt, dass die erste Basisstation und die besagte andere Basisstation in einem Abstand von mindestens einigen Zellen voneinander getrennt sind.

8. Verfahren nach einem beliebigen der vorstehenden Ansprüche, wobei in der ersten Basisstation (4, K) nach dem Übergang in den zweiten Betriebsmodus ein Timer einer gegebenen Zeitspanne gestartet wird und die erste Basisstation nach Ablaufen der gegebenen Zeitspanne in den ersten Betriebsmodus zurückkehrt.

9. Verfahren nach Anspruch 8, wobei, wenn vor Ablaufen der gegebenen Zeitspanne ein Befehl von dem Netzwerk-Controller (8) empfangen wird, die erste Basisstation in den ersten Betriebsmodus zurückkehrt.

10. Verfahren nach einem beliebigen der vorstehenden Ansprüche, wobei die erwarteten Lastpegel für jede einstündige Zeitspanne für jeden Tag der Woche durch Aufzeichnen eines laufenden Mittelwerts von Verbrauchsdaten in einer jeden der einstündigen Zeitspannen über mehrere Wochen hinweg ermittelt werden.

11. Verfahren nach Anspruch 10, wobei die laufenden Mittelwertdaten um Gewichtungen, welche voraussehbare Verbrauchsschwankungen berücksichtigen, angepasst werden.

12. Erste Basisstation (4, K) für drahtlose Telekommunikationen mit mehreren Zellen, wobei die Basisstation umfasst:
Einen Verkehrslastprozessor, welcher dafür konfiguriert ist, erwartete Verkehrslastpegel auf den Zellen der ersten Basisstation zu ermitteln und erwartete Verkehrslastpegel auf Zellen, welche der ersten Basisstation zugewandt sind, aufzuzeichnen;
einen Controller (14), welcher dafür konfiguriert ist, die Basisstation in Abhängigkeit davon, ob Kriterien in Bezug auf die besagten Pegel erfüllt sind, von einem Modus, in welchem die Basisstation Pilotsignale sendet, in einen Modus, in welchem die Basisstation keine Pilotsignale sendet, umzuschalten; **dadurch gekennzeichnet, dass**
die erwarteten Lastpegel in Zellen, welche der ersten Basisstation zugewandt sind, erwartete Lastpegel in Zellen (A:2, B:0, B:2, C:0, D:0, D:1, E:1, F:1; F:2), welche der ersten Basisstation eines Rings (A, B, C, D, E, F) der am nächsten liegenden benachbarten Basisstationen zugewandt sind, und erwartete Lastpegel in Zellen (U:1, V:1, W:0, X:0, Y:2, Z:2), welche der ersten Basisstation von ausgewählten Basisstationen (U, V, W, X, Y, Z) eines Rings von am nächsten liegenden benachbarten Basisstationen zugewandt sind, umfassen; und wobei die Kriterien einschließen, dass die erwartete Last auf jeder Zelle der ersten Basisstation (4, K) niedriger als ein gegebener Pegel ist, dass die erwartete Last auf jeder Zelle, welche der ersten Basisstation eines Rings von am nächsten liegenden benachbarten Basisstationen zugewandt ist, niedriger ist als ein zweiter Pegel, welcher höher als der erste Pegel ist, und dass die erwartete Last in den Zellen, welche der ersten Basisstation von ausgewählten Basistationen eines Rings von am nächsten liegenden benachbarten Basisstationen zugewandt sind, niedriger ist als ein dritter Pegel, welcher höher als der zweite Pegel ist

13. Basisstation nach Anspruch 12, wobei der erste Betriebsmodus ein Betriebsmodus mit höherem Energieverbrauch ist und der zweite Betriebsmodus ein Betriebsmodus mit niedrigerem Energieverbrauch ist.

14. Netzwerk für drahtlose Telekommunikationen, umfassend die Basisstation (4, K) gemäß Anspruch 12 oder 13, benachbarte Basisstationen und einen Funknetzwerk-Controller (8), wobei, wenn bei Gebrauch die Kriterien erfüllt sind, die Basisstation (4, K) dem Netzwerk-Controller (8) der Basisstation und der benachbarten Basisstationen bestätigt, ob ein Umschalten in den zweiten Modus zugelassen ist.

## Revendications

1. Procédé d'une première station de base (4, K) pour une commutation de télécommunications sans fil entre un premier mode dans lequel la première station de base envoie des signaux de canal pilote et un deuxième mode dans lequel la première station de base n'envoie pas de signaux de canal pilote ;
la première station de base (4, K) enregistrant, pendant une période donnée, des niveaux de charge prévus sur les cellules de la première station de base, des niveaux de charge prévus dans les cellules faisant face à la première station de base ; et
la première station de base déterminant la commutation entre les modes en fonction des critères satisfaits par rapport auxdits niveaux, **caractérisé par**
les niveaux de charge prévus dans les cellules faisant face à la première station de base comprennent des niveaux de charge prévus dans les cellules (A:2, B:0, B:2, C:0, D:0, D:1, E:1, F:1, F:2) faisant face à la première station de base d'un anneau (A, B, C, D, E, F) de stations de base voisines les plus proches, et des niveaux de charge prévus dans les cellules (U:1, V:1, W:0, X:0, Y:2, Z:2) faisant face à la première station de base de stations de base sélectionnées (U, V, W, X, Y, Z) parmi un anneau de stations de base voisines les plus proches suivantes ; et dans lequel les critères comprennent que la charge prévue sur chaque cellule de la première station de base (4, K) est inférieure à un premier niveau donné, la charge prévue sur chaque cellule faisant face à la première station de base d'un anneau de stations de base voisines les plus proches est inférieure à un deuxième niveau qui est supérieur au premier niveau, et la charge prévue dans les cellules faisant face à la première station de base de stations de base sélectionnées parmi un anneau de stations de base voisines les plus proches suivantes est inférieure à un troisième niveau qui est supérieur au deuxième niveau.

2. Procédé selon la revendication 1, dans lequel les stations de base voisines ont chacune au moins trois cellules, les stations de base dans l'anneau de stations de base les plus proches présentent chacune une ou deux cellules faisant face à la première station de base, et
les stations de base sélectionnées parmi l'anneau de stations de base les plus proches suivantes présentent chacune une cellule unique respective faisant face à la première station de base.

3. Procédé selon la revendication 2, dans lequel les stations de base sélectionnées (U, V, W, X, Y, Z) parmi l'anneau de stations de base les plus proches suivantes sont des stations de base alternatives dans cet anneau.

4. Procédé selon l'une quelconque des revendications précédentes, dans lequel le premier mode est un mode d'utilisation de puissance supérieure et le deuxième mode est un mode d'utilisation de puissance inférieure.

5. Procédé selon l'une quelconque des revendications précédentes, dans lequel, en fonction des critères satisfaits, la première station de base (4, K) confirme avec un contrôleur de réseau (8) de la première station de base et des stations de base voisines si la commutation vers le deuxième mode est autorisée.

6. Procédé selon la revendication 5, dans lequel le contrôleur de réseau (8) n'autorise pas la commutation de mode selon qu'une autre station de base dans le domaine du contrôleur de réseau est dans le deuxième mode ou a fait une demande en cours pour passer dans le deuxième mode.

7. Procédé selon la revendication 5, dans lequel le contrôleur de réseau (8) autorise la commutation de mode même en fonction d'une autre station de base dans le domaine du contrôleur de réseau qui est dans le deuxième mode ou ayant fait une demande en cours pour passer dans le deuxième mode, à condition que la première station de base et ladite autre station de base soient séparées par une distance d'au moins plusieurs cellules.

8. Procédé selon l'une quelconque des revendications précédentes, dans lequel dans la première station de base (4, K) un temporisateur d'une période donnée est lancé lors de l'entrée dans le deuxième mode et, une fois la période donnée expirée, la première station de base revient au premier mode.

9. Procédé selon la revendication 8, dans lequel, lorsqu'une commande du contrôleur de réseau (8) est reçue avant que la période donnée n'expire, la première station de base revient au premier mode.

10. Procédé selon l'une quelconque des revendications précédentes, dans lequel les niveaux de charge prévus sont déterminés pour chaque période d'une heure pour chaque jour de la semaine en enregistrant une moyenne mobile de données d'utilisation dans chacune des périodes d'une heure sur plusieurs semaines.

11. Procédé selon la revendication 10, dans lequel les données à moyenne mobile sont ajustées par poids pour représenter une variation d'utilisation prévisible.

12. Première station de base (4, K) pour des télécommunications sans fil comprenant de multiples cellules, la station de base comprenant :
un processeur de charge de trafic configuré pour déterminer des niveaux de charge de trafic prévus sur les cellules de la première station de base et pour enregistrer des niveaux de charge de trafic prévus sur des cellules faisant face à la première station de base ;
contrôleur (14) configuré pour faire passer la station de base d'un mode dans lequel la station de base envoie des signaux pilotes à un mode dans lequel la station de base n'envoie pas de signaux pilotes en fonction de critères satisfaits par rapport auxdits niveaux ; **caractérisée en ce que**
les niveaux de charge prévus dans les cellules faisant face à la première station de base comprennent des niveaux de charge prévus dans les cellules (A:2, B:0, B:2, C:0, D:0, D:1, E:1, F:1, F:2) faisant face à la première station de base d'un anneau (A, B, C, D, E, F) de stations de base voisines les plus proches, et des niveaux de charge prévus dans les cellules (U:1, V:1, W:0, X:0, Y:2, Z:2) faisant face à la première station de base de stations de base sélectionnées (U, V, W, X, Y, Z) parmi un anneau de stations de base voisines les plus proches suivantes ; et dans laquelle les critères comprennent que la charge prévue sur chaque cellule de la première station de base (4, K) est inférieure à un premier niveau donné, la charge prévue sur chaque cellule faisant face à la première station de base d'un anneau de stations de base voisines les plus proches est inférieure à un deuxième niveau qui est supérieur au premier niveau, et la charge prévue dans les cellules faisant face à la première station de base de stations de base sélectionnées parmi un anneau de stations de base voisines les plus proches suivantes est inférieure à un troisième niveau qui est supérieur au deuxième niveau.

13. Station de base selon la revendication 12, dans laquelle le premier mode est un mode d'utilisation de puissance supérieure et le deuxième mode est un mode d'utilisation de puissance inférieure.

14. Réseau pour des télécommunications sans fil comprenant la station de base (4, K) selon la revendication 12 ou 13, des stations de base voisines et un contrôleur de réseau radio (8), dans lequel, en cours d'utilisation, en fonction des critères satisfaits, la station de base (4, K) confirme avec le contrôleur de réseau (8) de la station de base et des stations de base voisines si la commutation dans le deuxième mode est autorisée.
